# EUROPEAN PATENT APPLICATION

(11) **EP 4 327 969 A1**
(43) Date of publication of application: **28.02.2024**
(21) Application number: 23188303.4
(22) Date of filing: 28.07.2023
(51) Int. Cl.: B23B 51/00, B23B 51/06

(54) **TIP AND CUTTING TOOL**

(30) Priority: 25.08.2022 JP 2022134416
(71) Applicant: Tungaloy Corporation, Iwaki-shi, Fukushima 970-1144 (JP)
(72) Inventor: SHIKAMA, Hiroya, Fukushima (JP)
(74) Representative: Vossius & Partner Patentanwälte Rechtsanwälte mbB

(57) **Abstract**

A tip that is capable of preventing chip clogging during machining, and a cutting tool equipped with this tip, are provided. The tip 30 includes a first surface 310 that is a portion making contact with a body 20 of the cutting tool 10 when the tip is attached to the body 20, a second surface 320 located on the opposite side from the first surface 310, a leading end part 330 connecting the first surface 310 and the second surface 320 and provided with a cutting edge 331, and a trailing end part 340 located on the opposite side from the leading end part 330. The second surface 320 is formed with a recessed part 321 receding toward the first surface 310 in a portion closer to the trailing end part 340.

## Description

### Technical Field

The present invention relates to a tip and a cutting tool equipped with this tip.

### Background Art

**A** machining method called Boring and Trepanning Association (BTA) used for drilling deep holes in a workpiece is known. As described in Patent Document 1 below, in BTA, fluid is supplied toward the cutting edge via a gap between the inner circumferential surface of the hole and the outer circumferential surface of the cutting tool. The fluid is discharged to the outside along with the chips produced during the machining through a discharge hole formed inside the cutting tool.

### Citation List

### Patent Document

Patent Document 1: Patent Publication JP-A-2007-276056

### Summary

### Technical Problem

A tip with a cutting edge for a BTA cutting tool is typically positioned near the entrance of the discharge hole. This means that the tip can narrow the entrance of the discharge hole, making it difficult for the fluid containing chips to flow into the discharge hole. In some cases, the chips can cause the entrance of the discharge hole to become clogged.

An object of the present invention is to provide a tip that is capable of preventing chip clogging during machining and a cutting tool equipped with this tip.

### Solution to Problem

The tip according to the present invention is a tip for a cutting tool, and includes a first surface that is a portion making contact with a body of the cutting tool when the tip is attached to the body, a second surface located on an opposite side from the first surface, a leading end part connecting the first surface and the second surface and provided with a cutting edge, and a trailing end part located on an opposite side from the leading end part. The second surface is formed with a recessed part receding toward the first surface in a portion closer to the trailing end part.

With a tip configured as described above being attached to a cutting tool, the cross-sectional area of the flow path for a fluid containing chips to flow through is increased by the recessed part. The tip does not narrow the entrance of the discharge hole and allows a portion of the fluid to be guided smoothly to the discharge hole via the recessed part. Consequently, chip clogging near the entrance of the discharge hole can be prevented.

In a more preferable configuration, the recessed part may be provided in an area of the second surface excluding both ends in a width direction, the width direction being a direction perpendicular to a direction from the leading end part toward the trailing end part and parallel to the first surface.

In a more preferable configuration, the recessed part may be angled toward the first surface in a direction toward the trailing end part.

The cutting tool according to the present invention includes a body, and a tip attached to the body. The body is formed with a discharge hole that extends along a rotational axis to discharge fluids. The tip includes a first surface making contact with the body, a second surface located on an opposite side from the first surface, a leading end part connecting the first surface and the second surface and provided with a cutting edge, and a trailing end part located on an opposite side from the leading end part. The second surface is formed with a recessed part receding toward the first surface in a portion closer to the trailing end part.

With a cutting tool configured as described above, the cross-sectional area of the flow path for a fluid containing chips to flow through is increased by the recessed part. The tip does not narrow the entrance of the discharge hole and allows a portion of the fluid to be guided smoothly to the discharge hole via the recessed part. Consequently, chip clogging near the entrance of the discharge hole can be prevented.

In a more preferable configuration, the recessed part may have an inner surface continuous with an inner surface of the discharge hole without a step in a boundary portion therebetween.

In a more preferable configuration, the recessed part may have an inner surface smoothly continuous with an inner surface of the discharge hole in a boundary portion therebetween.

### Advantageous Effects of Invention

According to the present invention, a tip that is capable of preventing chip clogging during machining, and a cutting tool equipped with this tip, are provided.

### Brief Description of Drawings

Fig. 1 is a diagram illustrating an entire configuration of a cutting tool according to the embodiment.
Fig. 2 is a diagram of the cutting tool according to the embodiment drawn as viewed from the leading end side in the direction along the rotational axis.
Fig. 3 is a diagram illustrating a configuration of a tip of the cutting tool according to the embodiment.
Fig. 4 is a cross-sectional view schematically drawing a portion of Fig. 1 at the IV-IV section.

### Description of Embodiments

The embodiment of the present invention is described below with reference to the accompanying drawings. For easier understanding of the description, the same constituent elements in the drawings are given the same reference numerals as much as possible and duplicate descriptions thereof will be omitted.

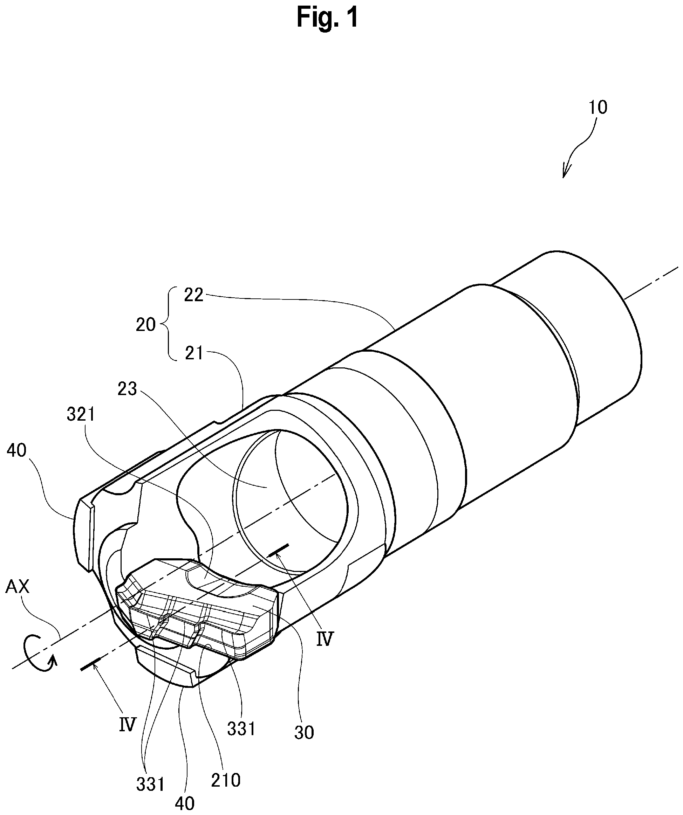

The cutting tool 10 according to this embodiment is a cutting tool designed for BTA machining used for drilling deep holes. As shown in Fig. 1, the cutting tool 10 includes a body 20, a tip 30, and a guide pad 40.

The body 20 is a member that constitutes substantially the entire cutting tool 10 and is made of steel. The body 20 is made up of two components, a drill head 21 and a drill tube 22.

The drill head 21 is a component of the body 20 on the leading end side, a part to which the tip 30 to be described later is attached. The drill head 21 is substantially cylindrical, with part of a side surface thereof being cut away as shown in Fig. 1. In the cut-away part is provided a mounting seat 210 for attaching the tip 30. The drill head 21 is screwed into the leading end of the drill tube 22 to be integral with the drill tube 22.

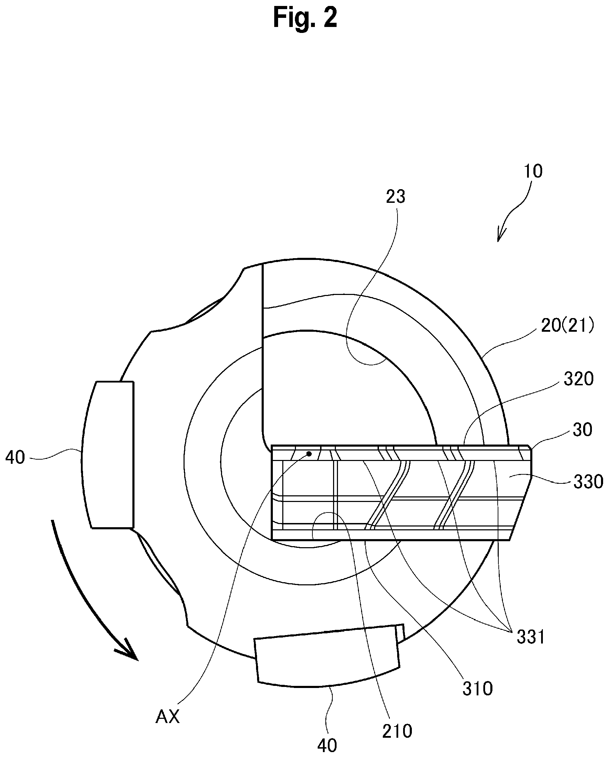

The drill tube 22 is a component of the body 20 on the trailing end side. The drill tube 22 is substantially cylindrical similarly to the drill head 21. A portion of the drill tube 22 that is located on the opposite side from the drill head 21 (i.e., trailing end side) is gripped by a machine tool (not shown) and driven to rotate about the rotational axis AX during machining. The rotational axis AX coincides with respective center axes of the drill head 21 and drill tube 22, which are substantially cylindrical. The drill head 21 and drill tube 22 are disposed such as to be aligned along the rotational axis AX. In Fig. 1 and Fig. 2, the rotating direction of the body 20 during machining is indicated by an arrow.

The body 20 is formed with a discharge hole 23. The discharge hole 23 is a hole for guiding a coolant, which is supplied along an outer circumferential surface of the body 20, to be discharged to the outside along with the chips. The discharge hole 23 extends along the rotational axis AX throughout the body 20. The discharge hole 23 is a substantially cylindrical hole, with a center axis generally coinciding with the rotational axis AX. In the vicinity of the tip 30, however, the center axis of the discharge hole 23 is inclined relative to the rotational axis AX. Specifically, the inner surface of the discharge hole 23 is inclined toward the rotational axis AX in the direction toward the tip 30.

The tip 30 is a component formed with a cutting edge 331. In this embodiment, the tip is entirely composed of cemented carbide. The tip 30 or at least the cutting edge 331 thereof may contain, for example, one of hard materials such as cermet, ceramics, and a sintered body containing cubic boron nitride, materials including a coating layer formed by PVD or CVD on the surface of these hard materials, or monocrystalline diamond or a sintered body containing diamond. As mentioned before, the tip 30 is attached to the mounting seat 210 of the body 20. In this embodiment, the tip 30 is brazed to the mounting seat 210. Instead of this configuration, the tip 30 may be secured to the mounting seat 210 by, for example, screw fastening, and configured to be removable from the mounting seat 210 to allow for replacement. In other words, the tip 30 may be provided in a manner known as a "cutting insert."

The guide pad 40 is a member that makes contact with an inner surface of the hole being drilled during machining to minimize deformation or the like of the body 20. A hole formed in a workpiece as the cutting tool 10 rotates shall be hereinafter also referred to as "machined hole." Two guide pads 40 are provided in this embodiment. Providing the guide pads 40 allows for machining while maintaining the straightness and circularity of a machined hole.

A coolant, which is a fluid, is supplied from the outside during the BTA machining of a workpiece by the cutting tool 10, via a gap between an inner circumferential surface of the machined hole and an outer circumferential surface of the body 20. The coolant, after reaching the cutting edge 331 on the leading end side, flows into the discharge hole 23 of the body 20 along with the chips produced during the machining. The coolant flows through the discharge hole 23 toward the trailing end side and is then discharged to the outside.

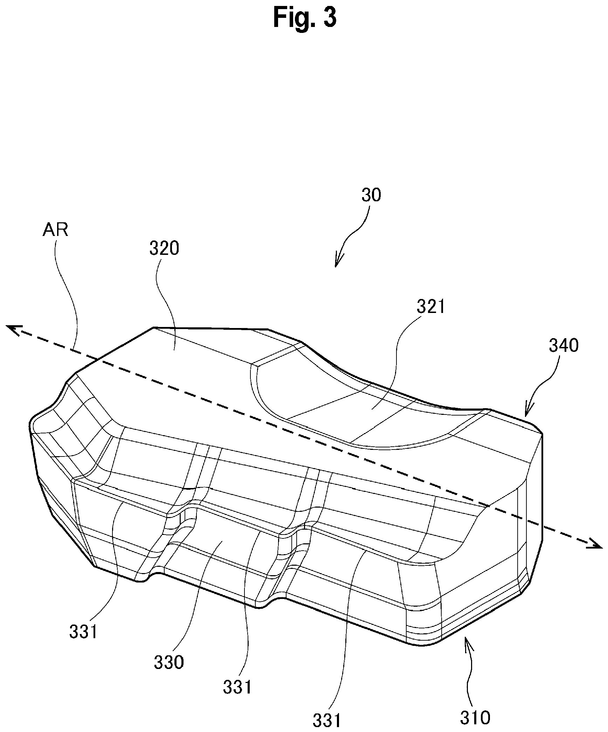

A specific configuration of the tip 30 is described below. As shown in Fig. 3, the tip 30 includes a first surface 310, a second surface 320, a leading end part 330, and a trailing end part 340.

The first surface 310 is a surface facing backward in the rotating direction when the tip 30 is attached to the body 20, a portion making contact with and being restrained by the mounting seat 210 of the body 20. In this embodiment, the first surface 310 is substantially entirely brazed to the mounting seat 210. Other surfaces of the tip 30 (e.g., an inner side surface or a side surface on the trailing end side) may be brazed to the body 20 in addition to the first surface 310.

The second surface 320 is a surface facing forward in the rotating direction when the tip 30 is attached to the body 20. Namely, the second surface 320 is located on the opposite side from the first surface 310. As shown in Fig. 2, the second surface 320 is a surface that is mostly parallel to the first surface 310. The second surface 320 can also be called a surface located on the side that is advancing in the direction of travel when the body 20 rotates about the rotational axis AX.

The leading end part 330 is a portion connecting the first surface 310 and the second surface 320, and the most distal portion when the tip 30 is attached to the body 20. A cutting edge 331 for machining a workpiece is provided to the leading end part 330. As shown in Fig. 1 and Fig. 3, the leading end part 330 has a steplike form rather than a single flat surface, with the cutting edge 331 provided to each of the multiple steps. The leading end part 330 or cutting edge 331 may have other shapes than this.

The trailing end part 340 is a portion connecting the first surface 310 and the second surface 320, and the portion located on the opposite side from the leading end part 330 in the direction along the rotational axis AX. The trailing end part 340 is substantially perpendicular to the first surface 310 and flat.

The second surface 320 of the tip 30 is formed with a recessed part 321 receding toward the first surface 310. The recessed part 321 is formed in a portion of the second surface 320 closer to the trailing end part 340. Specifically, the recessed part 321 starts from a midpoint of the second surface 320 in the direction along the rotational axis AX and extends to an endpoint on the side of the trailing end part 340 in the same direction.

The direction indicated by arrow AR in Fig. 3 shall be defined as the "width direction" of the tip 30. The width direction is a direction perpendicular to the direction from the leading end part 330 toward the trailing end part 340 (or the direction along the rotational axis AX) and parallel to the first surface 310. As shown in Fig. 3, the recessed part 321 is provided in an area of the second surface 320 excluding both ends in the width direction. As a result, the recessed part 321 in this embodiment is formed in a groove shape extending toward the trailing end part 340.

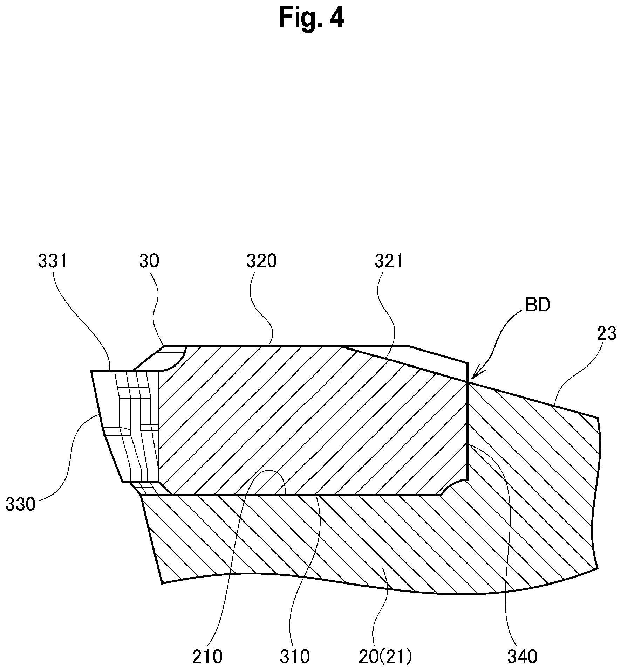

Fig. 4 shows a schematic cross-sectional drawing of a portion of the tip 30 and body 20 (drill head 21), which is a portion of Fig. 1 at the IV-IV section. As shown in Fig. 4, the recessed part 321 has an inner surface that is inclined relative to the rotational axis AX, such as to be angled toward the first surface 310 in the direction toward the trailing end part 340.

Reference symbol "BD" in Fig. 4 denotes a boundary portion between the inner surface of the recessed part 321 and the inner surface of the discharge hole 23. This portion shall be hereinafter referred to also as a "boundary portion BD." The boundary portion BD may also be called a boundary between the recessed part 321 and the trailing end part 340, or a downstream end of the recessed part 321 in the direction of the flow of coolant.

As shown in Fig. 4, the inner surface of the recessed part 321 and the inner surface of the discharge hole 23 are continuous in the boundary portion BD without a step. The phrase "without a step" means that a given coordinate on the inner surface of the recessed part 321 and a given coordinate on the inner surface of the discharge hole 23 coincide with each other substantially or completely in the boundary portion BD in the cross section of Fig. 4. The displacement between the coordinates should preferably be limited to not greater than 0.1 mm. A "coordinate" is a distance from a point of origin that is set arbitrarily in the cross section of Fig. 4, for example. Moreover, in this embodiment, the inner surface of the recessed part 321 and the inner surface of the discharge hole 23 are smoothly continuous in the boundary portion BD. The phrase "smoothly continuous" means that the inclination of the inner surface of the recessed part 321 and the inclination of the inner surface of the discharge hole 23 coincide with each other in the boundary portion BD in the cross section of Fig. 4. Strictly speaking, there may be provided minute chamfers or the like on the inner surfaces of the recessed part 321 or discharge hole 23 in the boundary portion BD. The terms are each defined as above assuming that the shape of such chamfers or the like is negligible.

The above configuration of the tip 30 provides the following effects, which are described below. Generally, cutting tools used for BTA machining are typically provided with a tip positioned near the entrance of a discharge hole as in this embodiment. As a result, the tip could narrow the entrance of the discharge hole, making it difficult for a fluid containing chips to flow into the discharge hole. In some cases, the chips could cause the entrance of the discharge hole to become clogged.

The cutting tool 10 according to this embodiment is formed with the recessed part 321 in the second surface 320 of the tip 30 to secure a wide path for the coolant to flow into the discharge hole 23. By not narrowing the entrance of the discharge hole 23 with a part of the tip 30, the occurrence of chip clogging during machining can be prevented.

The recessed part 321 has an inner surface that is a smooth inclined surface without any mid-way steps. The inner surface of the recessed part 321 and the inner surface of the discharge hole 23 are smoothly continuous in the boundary portion BD without a step. This configuration prevents a situation where the coolant or chips guided by the recessed part 321 stagnate midway within the recessed part 321 or in the boundary portion BD. Consequently, chip clogging can be prevented more reliably.

In the case where a flow of coolant or chips can be sufficiently secured, i.e., in the case where stagnation or similar issues mentioned above are not expected to occur, there may be a step in the boundary portion BD, or there may be a change in the inclination of the inner surface at the boundary portion BD. The inner surface of the recessed part 321 may be partially or entirely curved, or may have mid-way steps in the cross section of Fig. 4, rather than being straight as in this embodiment.

As mentioned before, the recessed part 321 is provided in an area of the second surface 320 excluding both ends in the width direction. As a result, the tip 30 and the body 20 are smoothly continuous without a step therebetween at these "both ends" mentioned above. This means that formation of the recessed part 321 does not increase the number of steps in the flow path of the coolant.

The embodiment has been described with reference to specific examples above. However, the present disclosure is not limited to these specific examples. Any variations with design changes made to these specific examples as appropriate by those skilled in the art and containing the features of the present disclosure are also included within the scope of the present disclosure. Various elements in the specific examples described above, arrangements, conditions, shapes and so on are not limited to the illustrated examples and may be changed as required. The elements in the specific examples described above may be variously combined as suited as long as there is no technical inconsistency.

Reference Signs List
- 10: Cutting tool
- 20: Body
- 30: Tip
- 310: First surface
- 320: Second surface
- 321: Recessed part
- 330: Leading end part
- 340: Trailing end part

## Claims

1. A tip for a cutting tool, comprising:
a first surface that is a portion making contact with a body of the cutting tool when the tip is attached to the body;
a second surface located on an opposite side from the first surface;
a leading end part connecting the first surface and the second surface, and provided with a cutting edge; and
a trailing end part located on an opposite side from the leading end part,
the second surface being formed with a recessed part receding toward the first surface in a portion closer to the trailing end part.

2. The tip according to claim 1, wherein the recessed part is provided in an area of the second surface excluding both ends in a width direction,
the width direction being a direction perpendicular to a direction from the leading end part toward the trailing end part and parallel to the first surface.

3. The tip according to claim 1 or 2, wherein the recessed part is angled toward the first surface in a direction toward the trailing end part.

4. A cutting tool comprising:
a body; and
a tip attached to the body, preferably the tip according to any one of claims 1 to 3,
the body being formed with a discharge hole that extends along a rotational axis to discharge fluids,
the tip including
a first surface making contact with the body,
a second surface located on an opposite side from the first surface,
a leading end part connecting the first surface and the second surface, and provided with a cutting edge, and
a trailing end part located on an opposite side from the leading end part,
the second surface being formed with a recessed part receding toward the first surface in a portion closer to the trailing end part.

5. The cutting tool according to claim 4, wherein the recessed part has an inner surface continuous with an inner surface of the discharge hole without a step in a boundary portion therebetween.

6. The cutting tool according to claim 4 or 5, wherein the recessed part has an inner surface smoothly continuous with an inner surface of the discharge hole in a boundary portion therebetween.
